# EUROPÄISCHE PATENTSCHRIFT

(11) **EP 3 502 509 B1**
(45) Veröffentlichungstag und Bekanntmachung des Hinweises auf die Patenterteilung: **08.12.2021**
(21) Anmeldenummer: 18200564.5
(22) Anmeldetag: 16.10.2018
(51) Int. Cl.: F16G 1/10, F16G 1/28, F16G 5/08, F16G 5/20

(54) **ANTRIEBSRIEMEN MIT TEXTILAUFLAGE**
DRIVE BELT WITH TEXTILE OVERLAY
COURROIE D'ENTRAÎNEMENT À REVÊTEMENT TEXTILE

(30) Priorität: 20.12.2017 DE 102017223383
(43) Veröffentlichungstag der Anmeldung: 26.06.2019
(73) Patentinhaber: ContiTech Antriebssysteme GmbH, 30165 Hannover (DE)
(72) Erfinder: Schulte, Hermann, 30823 Garbsen (DE)
(74) Vertreter: Continental Corporation

(56) Entgegenhaltungen:
- DE-A1-102012 206 040
- DE-T5-112015 002 239

## Beschreibung

### Antriebsriemen mit Textilauflage

Die vorliegende Erfindung betrifft einen Antriebsriemen mit einem elastischen Grundkörper auf der Basis wenigstens eines thermoplastischen Elastomers oder auf der Basis eines Vulkanisats, umfassend eine Decklage als Riemenrücken und einen Unterbau mit einer Kraftübertragungszone, wobei die Kraftübertragungszone mit einem Gewebe versehen ist, dadurch gekennzeichnet, dass das Gewebe eine geschlossene Oberflächenstruktur aufweist.

Antriebsriemen, die auch als Kraftübertragungsriemen bezeichnet werden und im Funktionszustand zumeist endlos geschlossen sind, können als Flachriemen, Keilriemen, Keilrippenriemen, Zahnriemen und Kupplungsriemen ausgebildet sein. Von besonderer Bedeutung sind hierbei der Zahnriemen und der Keilrippenriemen.

Der Grundkörper des Antriebsriemens umfasst dabei eine Decklage als Riemenrücken und einen Unterbau mit einer Kraftübertragungszone. Diesbezüglich wird insbesondere auf die Patentanmeldungen DE 38 23 157 A1, DE 10 2006 007 509 A1, WO 2005/080821 A1, WO 2006/066669 A1 sowie auf die Patente US 3,981,206 und US 5,417,618 verwiesen. Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere (TPE) zu nennen sind. Der elastische Grundkörper ist ferner zumeist noch mit einem eingebetteten Festigkeitsträger bzw. Zugträger versehen, der ein- oder mehrlagig ausgeführt sein kann. Ein anderer Antriebsriemen ist aus der DE 11 2015 002239 T5 bekannt.

Antriebsriemen als schwerpunktmäßiger Einsatzbereich werden zur Geräuschreduzierung wie auch zur Erhöhung der Abriebbeständigkeit insbesondere im Bereich der Kraftübertragungszone mit einer Beschichtung versehen. Üblicherweise werden zur Beschichtung Textilauflagen verwendet. Vor allem Textilauflagen in Form eines Gewebes oder in Form von Maschenware (d.h. in Form eines Gestrickes oder Gewirkes) sind im Stand der Technik bekannt (vgl. beispielsweise WO 2011/1103272 A1, DE 10 2007 062 285 A1, DE 10 2006 007 509 A1 und US 4,027,545).

Ebenso ist bekannt, dass der Riemenrücken eines Antriebsriemens mit einer Beschichtung, insbesondere in Form einer Gewebeauflage, versehen sein kann. So beschreibt beispielsweise die Patentanmeldung DE 100 29 470 A1 einen Zahnriemen mit einem Rückengewebe mit texturierten Schussfäden bevorzugt aus Polyamid oder Polyurethan, wodurch sich die Biegewilligkeit und die Dehnfähigkeit verbessern, während gleichzeitig keine Tendenzen zum Ablaufen von den Zahnriemenscheiben zu erkennen ist.

Bei den oben beschriebenen Maßnahmen ist es nachteilig, dass es hierbei oft zu einem Austritt von Gummimischung aus dem Grundkörper auf die Kraftübertragungszone oder den Riemenrücken kommt.

In der Patentanmeldung DE 10 2012 105 510 A1 wird zur Lösung des vorstehend genannten Problems ein Antriebsriemen vorgeschlagen, dessen Riemenrücken und/oder Kraftübertragungszone mit einer Textilauflage in Form einer plattierten Maschenware versehen ist. Hier wird insbesondere das Problem angesprochen, dass bei Textilauflagen in Form von Maschenware die Gefahr von zu viel Mischungsdurchtritt durch die Maschen besteht, was zu einem schlechten Geräuschverhalten sowie einem erhöhten Verschleiß der Textilauflage führen kann.

In der Patentanmeldung DE 10 2012 206 040 A1 wird ein Antriebsriemen vorgeschlagen, dessen Riemenrücken mit einem Gewebe versehen ist, welches durch wenigstens ein Falschdrahtverfahren texturiert ist. Hierbei wird insbesondere das Problem angesprochen, dass es bei Verwendung von harten Heizmanschetten im Herstellungsprozess für Antriebsriemen häufig zu Gummidurchtritt auf der Riemenrückenseite kommt, was sich nachteilig auf den Produktionsprozess des Antriebsriemens sowie die Lebensdauer der Heizmanschetten auswirkt.

Der vorliegenden Erfindung liegt daher die Aufgabe zugrunde, einen Antriebsriemen bereitzustellen, dessen Kraftübertragungszone mit einer Textilauflage versehen ist, wobei der Gummidurchtritt durch die Textilauflage weiter verringert ist.

Diese Aufgabe wird durch die in den Ansprüchen gekennzeichneten Ausführungsformen gelöst.

Insbesondere wird erfindungsgemäß ein Antriebsriemen mit einem elastischen Grundkörper auf der Basis wenigstens eines thermoplastischen Elastomers oder auf der Basis eines Vulkanisats bereitgestellt, umfassend eine Decklage als Riemenrücken und einen Unterbau mit einer Kraftübertragungszone, wobei die Kraftübertragungszone mit einem Gewebe versehen ist, dadurch gekennzeichnet, dass das Gewebe eine geschlossene Oberflächenstruktur aufweist.

Gemäß der vorliegenden Erfindung wird der Gummidurchtritt durch die Textilauflage auf der Kraftübertragungszone durch Verwendung eines Gewebes mit einer geschlossenen Oberflächenstruktur erreicht. Der Vorteil der Verwendung eines Gewebes anstelle von Maschenware liegt darin, dass Maschenware häufig relativ offenmaschig ist, was einen Gummidurchtritt fördern kann. Selbst bei Verwendung von Maschenware mit einer Oberfläche, die wie in DE 10 2012 105 510 A1 beschrieben behandelt wurde, kann ein Gummidurchtritt nicht vollständig vermieden werden.

Das Gewebe kann jedwede geeignete geschlossene Oberflächenstruktur aufweisen. Im Rahmen der vorliegenden Erfindung ist mit einer geschlossenen Oberflächenstruktur gemeint, dass die Oberfläche nicht offenporig ist.

Gemäß der vorliegenden Erfindung enthält das Gewebe Kettfäden und Schussfäden, wobei die Kettfäden und/oder Schussfäden durch wenigstens ein Falschdrahtverfahren texturiert sind, um dadurch die geschlossene Oberflächenstruktur bereitzustellen.

Die Texturierung ist eine bekannte Bezeichnung aus der Textilchemie, unter der man die Erzeugung einer speziellen Faser-Textur durch maschinelle Behandlung von thermoplastischen Chemiefasern versteht. Sie wird hauptsächlich für die Herstellung von Garnen für die Bekleidungsindustrie und von Teppichen verwendet. Die Texturierung soll den Fasern eine bessere Haftung im Gespinstverband (hier im Gewebe), eine erhöhte mechanische Beanspruchbarkeit, einen volleren Griff, d. h. ein größeres Volumen und Bauschigkeit, sowie den daraus hergestellten Textilien eine höhere Elastizität und besseres Wärmeisolierungsvermögen verleihen. Hinsichtlich Details der Texturierung wird auf Chemielexikon Römpp Online, Version 3.14, verwiesen.

Überraschenderweise hat sich gezeigt, dass sich texturierte Garne, welche mit wenigstens einem Falschdrahtverfahren texturiert wurden, besonders gut als Gewebeauflage eines Antriebsriemens für die Kraftübertragungszone eignen, da sie eine besonders gute geschlossene Oberfläche bieten. Hierdurch wird, wie bereits oben erwähnt, der Austritt von Gummimischung deutlich reduziert, was wiederum vorteilhaft hinsichtlich Geräuschentwicklung sowie Abriebbeständigkeit ist. Mittlerweile existieren verschiedene Modifizierungen des Falschdrahtverfahrens, beispielsweise in WO 2005/087987A2 oder auch in DE 694 07 796 T2 beschrieben, wobei allen gemein ist, dass der Faden im Durchlauf mit einer bestimmten Drehungszahl (beispielsweise 2000 bis 3000 Drehungen/m) versehen wird und in diesem Zustand heiß fixiert wird. Nach dem Zurückdrehen bleibt dann in den einzelnen Filamenten die einfixierte Spiralstruktur erhalten.

Das Kett- und/oder Schussgarn kann mit allen bekannten Falschdrahtverfahren texturiert sein.

In einer bevorzugten Ausführungsform ist lediglich das Schussgarn des Gewebes mit wenigstens einem Falschdrahtverfahren texturiert. In einer anderen bevorzugten Ausführungsform ist sowohl das Kettgarn als auch das Schussgarn des Gewebes mit wenigstens einem Falschdrahtverfahren texturiert. In einer weiteren bevorzugten Ausführungsform verlaufen die die Kettfäden des Gewebes parallel zur Laufrichtung des Antriebsriemens.

Gemäß einer anderen bevorzugten Ausführungsform der vorliegenden Erfindung ist das Gewebe plattiert, um dadurch die geschlossene Oberflächenstruktur bereitzustellen. Im Rahmen der vorliegenden Erfindung wird unter einem plattierten Gewebe ein Gewebe verstanden, welches beispielsweise zwischen Walzen verdichtet wurde.

In einer anderen bevorzugten Ausführungsform der vorliegenden Erfindung ist das Gewebe gecrimpt, um dadurch die geschlossene Oberflächenstruktur bereitzustellen. Im Rahmen der vorliegenden Erfindung wird unter einem gecrimpten Gewebe ein Gewebe verstanden, dem eine Struktur eingeprägt wurde, beispielsweise eine Zickzack-Struktur oder eine Zickzack-ähnliche Struktur.

Das Gewebe kann aus einem oder mehreren geeigneten Garntypen hergestellt sein. Geeignete Garne bzw. Fäden, sowohl für Kette als auch für Schuss, können beispielsweise aus Naturfasern oder aus Chemiefasern bestehen. Beispiele für geeignete Natur- und Chemiefasern sind Fasern aus Cellulose (insbesondere Baumwolle (CO) und Viskose (CV)), Sisal, Hanf, Leinen, Seide, Kaschmir, Rosshaar, Aramid (AR), Polyurethan (PU), Polybcnzimidazol (PBI), Mclamin (MEL), Polybcnzoxazol (PBO), Kohlenstoff, Polyamid (PA) (insbesondere PA 6.6, PA 12, PA 6, PA 4.6), Polycarbonat (PC), Polyethylen (PE) (insbesondere UHMWPE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT)), Polytetrafluorethylen (PTFE), Polyphenylensulfid (PPS), Polyetheretherketon (PEEK), Polyester (PES) (insbesondere Polyethylenterephthalat (PET)) und Kombinationen davon.

Zweckmäßig ist es, wenn das Gewebe weniger als 5% Elastofasern, wie Elastanen oder Elastodienen, enthält. Es ist aber auch möglich, dass das Gewebe frei von Elastofasern ist. Die Verwendung von größeren Mengen Elastofasern hat sich aufgrund der geringen thermischen Stabilität als nicht oder nur bedingt geeignet erwiesen.

Als Materialien für das Gewebe, sowohl für Kette als auch für Schuss, haben sich thermoplastische Elastomere, wie beispielsweise Polyamide, bevorzugt PA 6.6, PA 6 oder PA 4.6, Polyester, wie beispielsweise Polyethylenteraphthalat und Polyphenylensulfide, als besonders geeignet gezeigt. Diese können alleine oder in Kombination verwendet werden. Die Zugfestigkeit des Garns beträgt vorzugsweise 30 bis 80 cN/Tex.

In einer besonders bevorzugten Ausführungsform der vorliegenden Erfindung hat das Gewebe eine Kette mit einer Dehnung von 5 bis 100%, bevorzugt 10 bis 70%, besonders bevorzugt 20 bis 50%, bei einer Kraft von 2 kg und einer Breite von 25 mm, und einen Schuss mit einer Dehnung von 40 bis 200%, bevorzugt von 60 bis 150%, besonders bevorzugt von 75 bis 150% und ganz besonders bevorzugt von 75 bis 120%, bei einer Kraft von 2 kg und einer Breite von 25 mm. Die Dehnung wurde hierbei an einer Probe mit 10 cm Länge und 25 mm Breite mittels eines Instron-Zugversuchs mit einer 1 kN Messzelle und einer Zuggeschwindigkeit von 500 mm/min bestimmt.

Die Dichte des Gewebes beträgt vorzugsweise 60 bis 750 g/m², besonders bevorzugt 250 bis 550 g/m².

Die Luftdurchlässigkeit des Gewebes liegt vorteilhafterweise im Bereich von 15 bis 100 m³/m²/min, bevorzugt im Bereich von 15 bis 91 m³/m²/min, bestimmt mittels der Luftdurchlässigkeitsmethode nach Frazier.

Für die Luftdurchlässigkeit ist es weiterhin vorteilhaft, wenn das Gewebe 50 bis 150 Kettfäden pro 15 mm und/oder 30 bis 100 Schussfäden pro 15 mm besitzt.

Das Gewebe kann mit jedem geeigneten Webmuster ausgestattet sein. Vorteilhafterweise handelt es sich hierbei um eine Leinwandbindung, Panamabindung oder Köperbindungen, auch gebrochene Köperbindungen, wie bspw. Kreuzkörperableitungen.

Besonders bevorzugt ist die Panamabindung, da sie aufgrund der Symmetrie keine bzw. nur eine sehr geringe Ablaufneigung zeigt.

Das Gewebe kann zusätzlich mit einem Haftmittel versehen sein, vorzugsweise auf der der Kraftübertragungszone zugewandten Seite. Das Haftmittel kann jedwedes geeignete Haftmittel sein. Ein bevorzugtes Haftmittel ist eine Polymerschicht, insbesondere eine Polymerfolie, welche vorzugsweise eine Polymerfolie auf Basis von Polyethylen ist.

In einer weiteren bevorzugten Ausführungsform der vorliegenden Erfindung kann das Gewebe mit einer Polymerlösung getränkt sein. Die Polymerlösung kann beispielsweise ein Resorcin-Formaldehyd-Latex (RFL) sein. Besonders bevorzugt ist ein Gewebe, das eine Polymerschicht als Haftmittel aufweist und mit einer Polymerlösung getränkt ist.

Gemäß einer bevorzugten Ausführungsform enthält das Haftmittel und/oder die Polymerlösung ein Trockenschmiermittel. Dieses kann zur Optimierung des Reibbeiwertes eingesetzt werden. Das Trockenschmiermittel ist vorzugsweise ein Fluorkunststoff, beispielsweise ausgewählt aus der Gruppe, bestehend aus Polytetrafluorethylen (PTFE), Polyvinylfluorid (PVF), Polyvinylidenfluorid (PVDF) und Kombination davon. Ein besonders bevorzugtes Trockenschmiermittel ist Polytetrafluorethylen (PTFE).

Das Gewebe und/oder das Haftmittel und/oder die Polymerlösung kann/können ferner elektrisch leitfähig ausgeführt sein, insbesondere auf der Basis von Ruß und/oder Graphit und/oder eines Metallzusatzes. Von besonderer Bedeutung ist dabei der Einsatz eines elektrisch leitfähigen Rußes.

Gemäß einer weiteren bevorzugten Ausführungsform der vorliegenden Erfindung ist weiterhin der Riemenrücken mit einem Gewebe versehen, welches eine geschlossene Oberflächenstruktur aufweist. In diesem Fall ist also nicht nur ein Gewebe auf der Kraftübertragungszone vorgesehen, sondern zusätzlich noch ein Gewebe auf dem Riemenrücken. Ein solches zusätzliches Gewebe auf dem Riemenrücken, welches eine geschlossene Oberflächenstruktur aufweist, ermöglicht auch dort einen geringeren Gummidurchtritt. Dies ist insbesondere bei der Verwendung von harten Heizmanschetten im Herstellungsprozess für die erfindungsgemäßen Antriebsriemen vorteilhaft, da sich ein Gummidurchtritt auf der Riemenrückenseite nachteilig auf den Produktionsprozess des Antriebsriemens sowie die Lebensdauer der Heizmanschetten auswirken kann.

Für das auf der Riemenrückenseite optional verwendete Gewebe gilt das Gleiche wie vorstehend in Bezug auf das Gewebe für die Kraftübertragungszone beschrieben; das Gewebe auf der Riemenrückenseite kann in gleicher Weise wie das Gewebe für die Kraftübertragungszone ausgewählt werden. Die beiden Gewebe des erfindungsgemäßen Antriebsriemens können gleich oder unterschiedlich sein. In einer bevorzugten Ausführungsform enthält das Gewebe Kettfäden und Schussfäden, wobei die Kettfäden und/oder Schussfäden durch wenigstens ein Falschdrahtverfahren texturiert sind, um dadurch die geschlossene Oberflächenstruktur bereitzustellen. Vorzugsweise verlaufen die Kettfäden des Gewebes parallel zur Laufrichtung des Antriebsriemens. In einer anderen bevorzugten Ausführungsform ist das Gewebe plattiert, um dadurch die geschlossene Oberflächenstruktur bereitzustellen. In einer anderen bevorzugten Ausführungsform ist das Gewebe gecrimpt, um dadurch die geschlossene Oberflächenstruktur bereitzustellen. Auch dieses Gewebe der Riemenrückseite kann mit einem Haftmittel versehen sein, beispielsweise mit einer Polymerschicht als Haftmittel. Dieses Gewebe kann auch mit einer Polymerlösung getränkt sein. Das Haftmittel und/oder die Polymerlösung können ein Trockenschmiermittel enthalten, welches vorzugswiese ein Fluorkunststoff ist.

Die vorliegende Erfindung betrifft ferner einen Antriebsriemen (1) mit einem elastischen Grundkörper auf der Basis wenigstens eines thermoplastischen Elastomers oder auf der Basis eines Vulkanisats, umfassend eine Decklage (2) als Riemenrücken und einen Unterbau (5) mit einer Kraftübertragungszone (8), wobei der Riemenrücken mit einem Gewebe (9) versehen ist, welches eine geschlossene Oberflächenstruktur aufweist, dadurch gekennzeichnet, dass das Gewebe (9) plattiert oder gecrimpt ist, um dadurch die geschlossene Oberflächenstruktur bereitzustellen. In dieser Ausführungsform ist zumindest der Riemenrücken mit einem Gewebe versehen, das eine geschlossen Oberflächenstruktur, erhalten durch Plattieren oder Crimpen, aufweist. Dieser Antriebsriemen hat beispielsweise gegenüber dem in der Patentanmeldung DE 10 2012 206 040 A1 beschriebenen Antriebsriemen, dessen Riemenrücken mit einem Gewebe versehen ist, welches durch wenigstens ein Falschdrahtverfahren texturiert ist, den Vorteil, dass das Plattieren oder Crimpen einfacher als das Texturieren mittels eines Falschdrahtverfahrens durchzuführen ist und damit mit weniger Aufwand bei der Herstellung verbunden ist.

Der erfindungsgemäße Antriebsriemen weist einen elastischen Grundkörper auf der Basis wenigstens eines thermoplastischen Elastomers oder auf der Basis eines Vulkanisats auf. Unter einem Elastomer werden formfeste, aber elastisch verformbare Kunststoffe verstanden, deren Glasübergangspunkt sich unterhalb der Raum- bzw. Einsatztemperatur befindet. Das Vulkanisat liegt vorzugsweise in Form einer vulkanisierten Kautschukmischung, enthaltend wenigstens eine Kautschukkomponente und Mischungsingredienzien, vor. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Wegen der besseren Wärmealterungsbeständigkeit werden bevorzugt Peroxide als Vernetzer eingesetzt. Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

In einer bevorzugten Ausführungsform der vorliegenden Erfindung ist der elastische Grundkörper ein Vulkanisat auf der Basis einer vulkanisierten Kautschukmischung, enthaltend wenigstens eine Kautschukkomponente und Mischungsingredienzien. Vorzugsweise ist die Kautschukkomponente aus der Gruppe ausgewählt, enthaltend Ethylen-Propylen-Mischpolymerisat (EPM) und/oder Ethylen-Propylen-Dien-Mischpolymerisat (EPDM) und/oder (teil)hydrierter Nitrilkautschuk (HNBR) und/oder Chloropren-Kautschuk (CR), und/oder Fluor-Kautschuk (FKM) und/oder Naturkautschuk (NR) und/oder Styrol-Butadien-Kautschuk (SBR) und/oder Butadien-Kautschuk (BR).

Zwischen der Decklage als Riemenrücken und dem Unterbau kann gemäß einer bevorzugten Ausführungsform weiterhin eine Festigkeitsträgerlage angeordnet sein. Diese kann beispielsweise Zugträger bzw. Zugstränge enthalten. Es ist besonders bevorzugt, dass die Festigkeitsträgerlage in Längsrichtung verlaufende, parallel angeordnete Zugträger aufweist. Geeignete Zugträger sind insbesondere Einzelcorde, beispielsweise aus Stahl, Polyamid, Aramid, Polyester, Glasfasern, Polyetheretherketon (PEEK) oder Polethylen-2,6-naphthalat (PEN).

Der erfindungsgemäße Antriebsriemen kann in jedweder geeigneten Form vorliegen. Der Antriebsriemen kann beispielsweise als Flachriemen, Keilriemen, Keilrippenriemen, Zahnriemen, Kupplungsriemen oder Aufzugsriemen ausgebildet sein. Besonders bevorzugt ist der Antriebsriemen als Zahnriemen ausgebildet. Handelt es sich bei dem Kraftübertragungsriemen um einen Keilrippenriemen, so hat dieser hierbei bevorzugt ein PK-Profil gemäß DIN 7867, insbesondere mit einer Rippenhöhe von 1,7 bis 2,5 mm, bevorzugt von 1,9 bis 2,3 mm.

Die Erfindung wird nun anhand eines Ausführungsbeispiels unter Bezugnahme auf eine schematische Längsschnittdarstellung beschrieben.

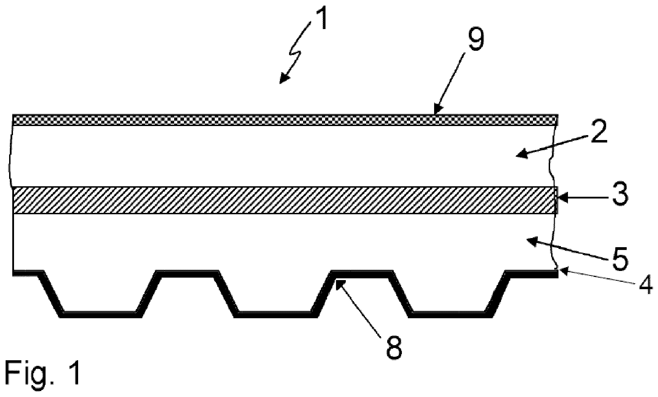

Figur 1 zeigt einen Antriebsriemen 1 in Form eines Zahnriemens mit einer Decklage 2 als Riemenrücken und einen Unterbau 5 mit einer Kraftübertragungszone 4. Die Decklage 2 und der Unterbau 5 bilden dabei als Gesamteinheit den elastischen Grundkörper auf der Basis eines thermoplastischen Elastomers oder auf der Basis eines Vulkanisates. Die Kraftübertragungszone 4 ist mit einem Gewebe 8 versehen, welches eine geschlossene Oberflächenstruktur aufweist. Die Decklage 2 als Riemenrücken ist mit einem optionalen Gewebe 9 versehen. Zwischen der Decklage 2 und dem Unterbau 5 befindet sich die ebenfalls optionale Festigkeitsträgerlage 3 in Form von Zugsträngen

### Bezugszeichenliste

- 1: Antriebsriemen (Zahnriemen)
- 2: Decklage als Riemenrücken
- 3: Festigkeitsträgerlage in Form von Zugsträngen
- 4: Kraftübertragungszone
- 5: Unterbau
- 8: Gewebe als Beschichtung der Kraftübertragungszone
- 9: Gewebe als Beschichtung der Decklage

## Patentansprüche

1. Antriebsriemen (1) mit einem elastischen Grundkörper auf der Basis wenigstens eines thermoplastischen Elastomers oder auf der Basis eines Vulkanisats, umfassend eine Decklage (2) als Riemenrücken und einen Unterbau (5) mit einer Kraftübertragungszone (4), wobei die Kraftübertragungszone (4) mit einem Gewebe (8) versehen ist, wobei das Gewebe (8) eine geschlossene Oberflächenstruktur aufweist, **dadurch gekennzeichnet, dass** das Gewebe (8) Kettfäden und Schussfäden enthält, wobei die Kettfäden und/oder Schussfäden durch wenigstens ein Falschdrahtverfahren texturiert sind, um dadurch die geschlossene Oberflächenstruktur bereitzustellen.

2. Antriebsriemen (1) nach Anspruch 1, wobei die Kettfäden des Gewebes (8) parallel zur Laufrichtung des Antriebsriemens verlaufen.

3. Antriebsriemen nach einem der Ansprüche 1 oder 2, wobei das Gewebe (8) weiterhin mit einem Haftmittel versehen ist.

4. Antriebsriemen nach Anspruch 3, wobei das das Haftmittel eine Polymerschicht ist.

5. Antriebsriemen nach einem der Ansprüche 1 bis 4, wobei das Gewebe (8) mit einer Polymerlösung getränkt ist.

6. Antriebsriemen nach einem der Ansprüche 3 bis 5, wobei das Haftmittel und/oder die Polymerlösung ein Trockenschmiermittel enthält.

7. Antriebsriemen nach Anspruch 5, wobei das Trockenschmiermittel ein Fluorkunststoff ist.

8. Antriebsriemen (1) nach einem der Ansprüche 1 bis 7, wobei weiterhin der Riemenrücken mit einem Gewebe (9) versehen ist, welches eine geschlossene Oberflächenstruktur aufweist.

9. Antriebsriemen nach einem der Ansprüche 1 bis 8, wobei der elastische Grundkörper ein Vulkanisat auf der Basis einer vulkanisierten Kautschukmischung ist, enthaltend wenigstens eine Kautschukkomponente und
Mischungsingredienzien.

10. Antriebsriemen nach Anspruch 9, wobei die Kautschukkomponente ausgewählt ist aus der Gruppe, enthaltend Ethylen-Propylen-Mischpolymerisat (EPM) und/oder Ethylen-Propylen-Dien-Mischpolymerisat (EPDM) und/oder (teil)hydrierter Nitrilkautschuk (HNBR) und/oder Chloropren-Kautschuk (CR), und/oder Fluor-Kautschuk (FKM) und/oder Naturkautschuk (NR) und/oder Styrol-Butadien-Kautschuk (SBR) und/oder Butadien-Kautschuk (BR).

11. Antriebsriemen nach einem der Ansprüche 1 bis 10, wobei der Antriebsriemen (1) als Zahnriemen ausgebildet ist.

## Claims

1. Drive belt (1) having an elastic main body based on at least one thermoplastic elastomer or based on a vulcanizate comprising an outer layer (2) as the belt backing and a substructure (5) having a force transmission zone (4), wherein the force transmission zone (4) is provided with a fabric (8), wherein the fabric (8) has a closed surface structure, **characterized in that** the fabric (8) contains warp threads and/or weft threads, wherein the warp threads and/or weft threads are textured via at least one false-twist process in order to thus provide the closed surface structure.

2. Drive belt (1) according to Claim 1, wherein the warp threads of the fabric (8) run parallel to the running direction of the drive belt.

3. Drive belt according to either of Claims 1 and 2, wherein the fabric (8) is further provided with an adhesive.

4. Drive belt according to Claim 3, wherein the adhesive is a polymer layer.

5. Drive belt according to any of Claims 1 to 4, wherein the fabric (8) is impregnated with a polymer solution.

6. Drive belt according to any of Claims 3 to 5, wherein the adhesive and/or the polymer solution contain(s) a dry lubricant.

7. Drive belt according to Claim 5, wherein the dry lubricant is a fluoroplastic.

8. Drive belt (1) according to any of Claims 1 to 7, wherein the belt backing is further provided with a fabric (9) having a closed surface structure.

9. Drive belt according to any of Claims 1 to 8, wherein the elastic main body is a vulcanizate based on a vulcanized rubber mixture containing at least one rubber component and mixture ingredients.

10. Drive belt according to Claim 9, wherein the rubber component is selected from the group containing ethylene-propylene copolymer (EPM) and/or ethylene-propylene-diene copolymer (EPDM) and/or (partially) hydrogenated nitrile rubber (HNBR) and/or chloroprene rubber (CR) and/or fluororubber (FKM) and/or natural rubber (NR) and/or styrene-butadiene rubber (SBR) and/or butadiene rubber (BR).

11. Drive belt according to any of Claims 1 to 10, wherein the drive belt (1) is in the form of a toothed belt.

## Revendications

1. Courroie d'entraînement (1) comprenant un corps de base élastique à base d'au moins un élastomère thermoplastique ou à base d'un vulcanisat, comprenant une couche de revêtement (2) en tant que dos de courroie et une sous-structure (5) pourvue d'une zone de transmission de force (4), la zone de transmission de force (4) étant pourvue d'un tissu (8), le tissu (8) comportant une structure de surface fermée, **caractérisée en ce que** le tissu (8) contient des fils de chaîne et des fils de trame, les fils de chaîne et/ou les fils de trame étant texturés par au moins un procédé de fausse torsion pour fournir ainsi la structure de surface fermée.

2. Courroie d'entraînement (1) selon la revendication 1, les fils de chaîne du tissu (8) s'étendant parallèlement à la direction de défilement de la courroie d'entraînement.

3. Courroie d'entraînement selon l'une des revendications 1 ou 2, le tissu (8) étant en outre pourvu d'un adhésif.

4. Courroie d'entraînement selon la revendication 3, l'adhésif étant une couche polymère.

5. Courroie d'entraînement selon l'une des revendications 1 à 4, le tissu (8) étant imprégné d'une solution de polymère.

6. Courroie d'entraînement selon l'une des revendications 3 à 5, l'adhésif et/ou la solution de polymère contenant un lubrifiant sec.

7. Courroie d'entraînement selon la revendication 5, le lubrifiant sec étant une matière synthétique fluorée.

8. Courroie d'entraînement (1) selon l'une des revendications 1 à 7, le dos de la courroie étant en outre pourvu d'un tissu (9) qui comporte une structure de surface fermée.

9. Courroie d'entraînement selon l'une des revendications 1 à 8, le corps de base élastique étant un vulcanisat à base d'un mélange caoutchouteux vulcanisé, contenant au moins un composant de caoutchouc et des ingrédients de mélange.

10. Courroie d'entraînement selon la revendication 9, le composant caoutchouteux étant choisi dans le groupe contenant le copolymère éthylène-propylène (EPM) et/ou le copolymère éthylène-propylène-diène (EPDM) et/ou le caoutchouc nitrile (partiellement) hydrogéné (HNBR) et/ou le caoutchouc chloroprène (CR), et/ou le caoutchouc fluoré (FKM) et/ou le caoutchouc naturel (NR) et/ou le caoutchouc styrène-butadiène (SBR) et/ou le caoutchouc butadiène (BR).

11. Courroie d'entraînement selon l'une des revendications 1 à 10, la courroie d'entraînement (1) étant réalisée sous la forme d'une courroie crantée.
